# EUROPÄISCHE PATENTSCHRIFT

(11) **EP 3 091 763 B1**
(45) Veröffentlichungstag und Bekanntmachung des Hinweises auf die Patenterteilung: **21.02.2018**
(21) Anmeldenummer: 15001358.9
(22) Anmeldetag: 07.05.2015
(51) Int. Cl.: H04W 4/12, G06F 1/16, G06F 3/01, H04M 1/725, H04L 29/08

(54) **KOMMUNIKATIONSSYSTEM MIT WENIGSTENS ZWEI AM KÖRPER TRAGBAREN KOMMUNIKATIONSEINHEITEN**
COMMUNICATION SYSTEM WITH AT LEAST TWO WEARABLE COMMUNICATION UNITS
SYSTÈME DE COMMUNICATION DOTÉ D'AU MOINS DEUX UNITÉS DE COMMUNICATION À PORTER SUR LE CORPS

(43) Veröffentlichungstag der Anmeldung: 09.11.2016
(73) Patentinhaber: Deutsche Telekom AG, 53113 Bonn (DE)
(72) Erfinder: HEINZ, Sebastian, 53227 Bonn (DE); WINDHEUSER, Jörg, 40627 Düsseldorf (DE); SCHMIDT-GABRIEL, Michael, 82234 Weissling (DE); BEER, Andreas, 85630 Grasbrunn (DE)
(74) Vertreter: Cohausz Hannig Borkowski Wißgott

(56) Entgegenhaltungen:
- US-A1- 2010 210 323
- US-A1- 2014 340 206
- US-A1- 2015 077 234
- US-B1- 8 643 479
- Anonymous: "TapTap, a touch communication wristband by Woodenshark - Kickstarter", , 16. März 2015 (2015-03-16), XP055220638, Gefunden im Internet: URL:http://web.archive.org/web/20150316183 611/https://www.kickstarter.com/projects/w oodenshark/taptap-wristband-a-new-way-to-s ay-i-love-you [gefunden am 2015-10-14]
- Anonymous: "TapTap vibrating wristband ensures your partner is ALWAYS with you | Daily Mail Online", , 10. November 2013 (2013-11-10), XP055221076, Gefunden im Internet: URL:http://www.dailymail.co.uk/sciencetech /article-2509886/TapTap-vibrating-wristban d-ensures-partner-ALWAYS-you.html [gefunden am 2015-10-15]

## Beschreibung

Die Erfindung betrifft ein Kommunikationssystem umfassend wenigstens zwei am Körper tragbare Kommunikationseinheiten ohne Sprach- oder Textkommunikationsmöglichkeit, jeweils mit einer Elektronik umfassend Sende- und Empfangseinheiten zur Kommunikation von Nachrichten zwischen den Kommunikationseinheiten, sowie jeweils wenigstens einer Ein- und Ausgabeeinheit zur taktilen oder thermischen Eingabe und taktilen oder thermischen Ausgabe von Nachrichten. Kommunikationssysteme dieser Art werden in den Dokumenten XP055220638, US 2010/0210323 A1, US 8,643,479 B1, US 2014/0340206 und US 2015/0077234 A1 offenbart. Ein weiteres Kommunikationssystem dieser gattungsgemäßen Art ist beispielsweise bekannt aus der Publikation US 8,326,378 B2 einer Konzerngesellschaft der Anmelderin.

Dort wird der Einsatz eines solchen Kommunikationssystems beschrieben bei zwei Personen, die sich über ein solches Kommunikationssystem zuneigungsbekundende Nachrichten zukommen lassen wollen, ohne hierfür sprachbasiert oder textbasiert kommunizieren zu müssen.

Die genannte Publikation offenbart hierbei Kommunikationseinheiten in unterschiedlichster Form, die am Körper tragbar sind, z.B. in der Form von Ohrringen, Halsketten oder Uhren sowie auch von Kommunikationseinheiten, die nicht unmittelbar am Körper zu tragen sind aber mitgenommen werden können, wie z.B. Kugeln.

Beschrieben wird beispielsweise das durch einfache Berührungen, Drücken oder Reiben einer solchen Kommunikationseinheit eine Nachricht von derjenigen Kommunikationseinheit an der diese Aktion ausgeführt wird an die andere Kommunikationseinheit übersendet wird und dort signalisiert wird, z.B. durch Vibration, Aufleuchten oder eine Temperaturänderung.

Problematisch bei den hier beschriebenen Kommunikationseinheiten ist es, dass Kommunikationseinheiten solcher Formen beschrieben werden, die bei Personen beiderlei Geschlechts unterschiedliche Akzeptanz aufweisen.

So ist es unter Männern beispielsweise weniger verbreitet Ohrringe oder Halsketten zu tragen im Vergleich zu Frauen, wohingegen Frauen eher Abstand davon nehmen Armbanduhren zu tragen.

Am Körper nicht tragbare Kommunikationseinheiten wie die in dem Dokument benannten Kugeln unterliegen hingegen eher dem Verlustrisikos und werden darüber hinaus häufig nicht mitgeführt, so dass eingehende Nachrichten trotz einer eventuellen Signalisierung nicht wahrgenommen werden von der anderen Person.

Darüber hinaus wünschen sich partnerschaftlich verbundene Personen eine technisch nicht trennbare Verbindung, um einander die fortdauernde Verbundenheit kundzutun.

Vor diesem Hintergrund ist es eine Aufgabe der Erfindung ein Kommunikationssystem der grundsätzlich eingangs genannten und bekannten gattungsgemäßen Art derart weiterzubilden, dass hinsichtlich der am Körper tragbaren Kommunikationseinheiten bei den Personen geschlechtsunabhängig im Wesentlichen eine gleiche Akzeptanz vorliegt, solche Kommunikationseinheiten am Körper zu tragen, wobei nicht nur durch die ästhetische Gestaltung und die wertige Ausführung einer solchen Kommunikationseinheit die Wertschätzung des anderen Partners zum Ausdruck gebracht werden soll, sondern auch durch die technische Gestaltung die immer währenden Verbundenheit zwischen den Partnern vermittelt werden soll.

Diese Aufgabe wird erfindungsgemäß dadurch gelöst, dass die am Körper tragbaren Kommunikationseinheiten jeweils als Ring oder Band zum Tragen an Körperextremitäten, insbesondere am Finger oder am Armgelenk oder am Hals ausgebildet sind und die Sende- und Empfangseinheiten nicht änderbar miteinander gepaart sind.

Durch die Ausbildung der Kommunikationseinheiten in der Form eines jeweiligen Ringes oder Bandes zum Tragen an Körperextremitäten und insbesondere zum Tragen am Finger oder am Armgelenk wird sichergestellt, dass sowohl Männer als auch Frauen in gleicher Weise gerne eine solche derart ausgebildete Kommunikationseinheit am Körper tragen.

Hierbei kann die Erfindung sogar vorsehen, dass bei einem Kommunikationssystem mit wenigstens zwei solchen am Körper tragbaren Kommunikationseinheiten eine der Kommunikationseinheiten als Fingerring und die andere als am Armgelenk zu tragender Ring ausgebildet ist. Auch kann eine als Band und die andere als Ring ausgebildet sein. Ebenso können die Kommunikationseinheiten alle als Ring zum Tragen am Finger oder auch alle als Ring zum Tragen am Armgelenk ausgebildet sein. In gleicher Weise können alle als Bänder ausgebildet sein.

Die Sende- und Empfangseinheiten, die in den ringförmig oder bandförmig ausgebildeten Kommunikationseinheiten jeweils vorgesehen sind, sind erfindungsgemäß technisch nicht änderbar miteinander gepaart, was im Sinne der Erfindung bedeutet, dass eine von einer der Kommunikationseinheiten dieses Systems abgesendete Nachricht ausschließlich nur von der anderen gepaarten Kommunikationseinheit empfangen werden kann. Diese Paarung zwischen den Kommunikationseinheiten kann erfindungsgemäß nicht aufgelöst werden, so dass eine beziehungstechnische Verbundenheit zwischen den Partnern auch technisch in dem erfindungsgemäßen Kommunikationssystem realisiert ist.

Für den Fall, dass sich die Beziehung der Partner lösen sollte, könnte keiner der Partner seine Kommunikationseinheit in Verbindung mit einem neuen Beziehungspartner nutzen.

Ein Kommunikationssystem der erfindungsgemäßen Art eignet sich daher besonders gut als Wertschätzung und Verbundenheitsgeste eines der beiden Partner gegenüber dem anderen, um mittels des Kommunikationssystems auch über lange Entfernungen hinweg, insbesondere bei sogenannten typischen Fernbeziehungen jederzeit die Verbundenheit durch die kommunizierten und an der anderen Kommunikationseinheit signalisierten Nachrichten auszudrücken.

Hierbei kann es vorgesehen sein, dass die Kommunikationseinheiten über ein Mobilfunknetzwerk unmittelbar miteinander kommunizieren, ohne andere Kommunikationseinheiten mobiler Art, wie beispielsweise Mobiltelefone in den Kommunikationsweg zwischenschalten zu müssen.

Die Verwendung eines erfindungsgemäßen Kommunikationssystems in Form von zwei oder mehr ringförmigen oder bandförmigen Kommunikationseinheiten kann somit autark völlig losgelöst von jeglichen anderen Kommunikationsmöglichkeiten der beteiligten Partner realisiert werden, wenngleich auch die Kommunikation über zwischengeschaltete weitere Kommunikationsgeräte möglich ist.

Dabei kann das Kommunikationssystem zwar regelmäßig zwei Kommunikationseinheiten für zwei in Beziehung stehende Partner vorsehen, es könnten jedoch auch mehr als zwei Kommunikationseinheiten eingesetzt werden, beispielsweise um einen familiären Verbund von mehreren Personen technisch symbolisiert darzustellen.

Eine jeweilige Kommunikationseinheit kann bei der vorliegenden Erfindung wenigstens einen Sensor umfassen, mittels dem z.B. eine von dem Träger des Ringes oder Bandes stammende Berührung (insbesondere tippend oder streichend) des Ringes oder Bandes ermittelbar ist, wobei der wenigstens eine Sensor unterhalb einer die äußere Ansichtsfläche des Ringes oder Bandes bildenden Oberfläche angeordnet ist.

Hierdurch wird sichergestellt, dass ein solcher Sensor das äußere Erscheinungsbild eines Ringes oder Bandes nicht verändert, da eine Berührung mittels des Sensors durch die Ansichtsfläche des Ringes oder Bandes hindurch technisch wahrgenommen werden kann. Beispielsweise kann hierfür der Sensor als kapazitiver Sensor ausgebildet sein.

Besonders diese Ausgestaltung hat den Vorteil, dass sich die äußere optische Erscheinung einer Kommunikationseinheit des erfindungsgemäßen Systems nicht anpassen muss an irgendwelche technischen Gegebenheiten der Kommunikationseinheit, sondern die optische Erscheinung im Wesentlichen ausschließlich aus ästhetischen Erwägungen heraus entwickelt werden kann.

Das Kommunikationssystem bzw. eine jegliche Kommunikationseinheit kann hierbei eingerichtet sein nach einer Berührung der berührungssensitiven Fläche mittels des vorgenannten Sensors eine Nachricht zu generieren und über ein Telekommunikationsnetzwerk, wie beispielsweise das Mobilfunknetz (z.B. GSM, UMTS, LTE etc.) an die andere technisch gepaarte Kommunikationseinheit zu versenden, wo diese Nachricht nach Empfang signalisiert wird, z.B. durch eine Vibration oder eine sonstige nicht sprachliche und nicht textliche Signalisierung, somit ggf. auch durch eine Erwärmung oder auch eine optische Signalisierung.

Die Erfindung kann hier auch vorsehen, in einem jeweiligen Ring oder Band einen Temperatursensor anzuordnen, wobei dieser bevorzugt ring- bzw. bandaußenseitig, d.h. vom Träger des Ringes / Bandes abgewandt angeordnet wird, um hierdurch die Möglichkeit zu erschließen Temperaturerhöhungen zu detektieren, die dadurch hervorgerufen werden, dass der Träger des Ringes / Bandes den Ring bzw. das Band von außen körperlich abdeckt, z.B. durch Auflegen einer Hand, wodurch sich die Temperatur an der Oberfläche des Ringes / Bandes erhöht, was mittels des Temperatursensors und daran angeschlossener Elektronik des Ringes / Bandes messtechnisch ermittelbar ist, so dass aus dieser Temperaturerhöhung, insbesondere über eine ansonsten vorherrschende mittlere Umgebungstemperatur hinaus, eine Nachricht generiert werden kann, die an die andere gepaarte Kommunikationseinheit versendet wird und dort nach Empfang zu einer Signalisierung führt, z.B. einer solchen Signalisierung, die ebenso eine Temperaturerhöhung bewirkt, hier insbesondere mittels eines erwärmbaren Elementes, welches bevorzugt ringinnenseitig / bandinnenseitig angeordnet ist, also an der zum Körper weisenden Seite des Ringes/Bandes, damit eine solche Temperaturerhöhung leicht und einfach wahrgenommen wird von dem Träger, der die Nachricht empfängt.

Die Erfindung kann weiterhin vorsehen, dass die Elektronik in einer jeweiligen als Ring oder Band ausgebildeten Kommunikationseinheit eingerichtet ist, mittels wenigstens eines Sensors in Abhängigkeit von Daten dieses wenigstens einen Sensors den aktuellen Tragestatus zwischen "aktuell getragen" und "aktuell nicht getragen" zu unterscheiden.

Ein solcher Sensor kann beispielweise als Temperatursensor (z.B. innenseitig zum Körper des Trägers gewandt) oder Bewegungs- bzw. Beschleunigungssensor ausgebildet sein. Es kann besonders bei Unterschreiten einer Grenztemperatur an diesem Sensor oder sofern keine Bewegungs- oder Beschleunigungsmesswerte ermittelt werden, aus diesen Daten die Information abgeleitet werden, dass die Kommunikationseinheit aktuell nicht am Körper getragen wird.

Bei dieser Ausführung kann die Elektronik eines jeweiligen Ringes / Bandes weiterhin eingerichtet sein, eine vom anderen Ring/Band empfangene Nachricht beim vorliegenden Status, der besagt, dass der Ring / das Band aktuell nicht getragen ist, die empfangene Nachricht zu speichern und erst dann zu signalisieren, wenn der Status auf "aktuell getragen" wechselt, was beispielsweise dadurch festgestellt werden kann, das eine gemessene Temperatur über einen gespeicherten Grenzwert oder aber Bewegungs- bzw. Beschleunigungsdaten, insbesondere oberhalb vom gespeicherten Grenzwerten, festgestellt werden, so dass die Elektronik hieraus schließt, dass der Ring / das Band nunmehr wieder getragen wird und die Nachricht signalisiert. So kann vermieden werden, dass bei einem nicht getragenen Ring / Band eingehende Nachrichten zwar signalisiert aber von dem anderen Partner nicht wahrgenommen werden.

Sensoren beider Art (Temperatur und Beschleunigung) können auch kombiniert werden, z.B. um festzustellen, oder der Träger z.B. schläft und deshalb eine empfangene Nachricht verpassen würde. Zeigt zwar der Tempertursensor an, dass der Ring / das Band getragen wird, der Beschleunigungssensor jedoch mit seinen Messwerten anzeigt, dass der Ring / das Band nicht oder wenig bewegt wird (Werte z.B. unterhalb gespeichertem Grenzwert und/oder grenzwertüberschreitende Werte zeitlich zu groß beabstandet), so kann hieraus eine Wahrscheinlichkeit ermittelt werden, dass der Träger schläft und eine Signalisierung einer empfangenen Nachricht unterbleiben, bis dass eine Wahrscheinlichkeit für ein Erwachen vorliegt.

Konstruktiv kann die Erfindung beispielsweise vorsehen, dass die Ringe oder Bänder in wenigstens zwei Elemente unterteilt sind, wobei eines der Elemente die Elektronik umfasst und die anderen Elementen nach Kundenwunsch aus mehreren designverschiedenen Elementen wählbar sind.

So kann der Erwerber oder die Erwerber eines solchen Systems beim Kauf die später zu tragenden Ringe bzw. Bänder trotz gleichbleibender Elektronikausstattung hinsichtlich verschiedener Designvarianten wählen und somit dem eigenen ästhetischen Geschmack anpassen.

Die Erfindung kann unabhängig von der vorgenannten Ausführung auch vorsehen, dass ein jeweiliger Ringe oder jeweiliges Band in Umfangsrichtung in wenigstens zwei, beispielsweise drei verbundene Abschnitte unterteilt ist. Diese Abschnitte können beispielsweise über Verbindungselemente miteinander verbunden sein, z.B. elastomere Verbindungselemente. Z.B. kann hierdurch auch die Möglichkeit erschlossen werden, die Umfangslänge eines solchen Ringes / Bandes aufgrund der Flexibilität in Grenzen anzupassen oder auch die bevorzugt elastomeren Verbindungselemente technisch zu funktionalisieren.

Insbesondere dann, wenn ein Ring / Band mit mehreren Abschnitten und diese verbindenden Verbindungselementen ausgeführt ist kann dieser Ring oder dieses Band konstruktiv so ausgebildet werden, dass ein solcher Ring / solches Band aus einem zunächst einstückigen Ring / Band gebildet wird durch Entfernen von Abschnitten und Ersetzung dieser entfernten Abschnitte durch Verbindungselemente die jeweils der Form der entfernten Abschnitte entsprechen. So kann ein Ring oder Band aus mehreren Abschnitte und dieseverbindenden Verbindungselementen geschaffen werden, welcher/ welches vollständig in seiner äußeren Erscheinung dem ursprünglichen einstückigen Ring / Band gleichkommt.

Die Erfindung kann hier in einer möglichen Ausführung beispielweise vorsehen, dass die gesamte Elektronik eines jeweiligen Ringes/Bandes in einem einzigen der mehreren Abschnitte angeordnet ist. Insbesondere bei dieser Ausführung kann es vorgesehen sein, dass eine Ausgabeeinheit angrenzend an ein Verbindungselement, bevorzugt ein elastomeres Verbindungselement angeordnet ist. Eine solche Ausgabeeinheit kann beispielsweise durch einen Vibrationsmotor ausgebildet sein, der nach Empfang einer Nachricht von dem anderen gepaarten Ring/Band eine Vibration hervorruft, die aufgrund der elastischen Ankopplung eines benachbarten Abschnittes über das elastische Verbindungselement besonders gut wahrnehmbar ist.

Bei einer Ausbildung eines jeweiligen Ringes / Bandes in Umfangsrichtung durch wenigstens zwei miteinander verbundene Abschnitte, wobei separate Verbindungselemente zwischen diesen Abschnitten vorgesehen sind, kann gemäß einer Weiterbildung der Erfindung auch in wenigstens eines der Verbindungselemente zwischen den Abschnitten eine Ein- und/oder Ausgabeeinheit umfassen wofür beispielsweise ein mechanischer Sensor in einem solchen Verbindungselement angeordnet ist, mit dem eine Verlagerung von Abschnitten gegeneinander messbar ist und/oder ein mechanischer Aktor in einem solchen Verbindungselement angeordnet ist, mittels dem eine Verlagerung von Abschnitten gegeneinander bewirkbar ist, beispielsweise wobei ein solcher Aktor als Vibrationsmotor oder als längenveränderbares Element ausgebildet ist. Verbindungselemente die zur Verbindung von Abschnitten dienen weisen dabei bevorzugt in Umfangsrichtung eines geringere Länge auf, als die durch diese Verbindungselemente verbundene Abschnitte und sind gemäß einer möglichen Ausführung auch aus einem anderen Material, wie beispielsweise vorgenannt aus einem elastomeren Material ausgebildet, wohingegen die verbundenen Abschnitte bevorzugt aus einem anderen Material und besonders bevorzugt aus einem Metall ausgebildet sind, wie z.B. einem Edelmetall.

Die Erfindung kann weiterhin vorsehen, dass die gesamte Elektronik eines jeweiligen Ringes / Bandes in mehrere Elektronikteile unterteilt ist, wobei die einzelnen Elektronikteile untereinander flexibel elektronisch kontaktiert sind, wie beispielsweise mittels flexibler Leiterplatten, z.B. solcher aus Polyimid, die entsprechende verbindende Leiterbahnen aufweisen. Hier können die einzelnen Elektronikteile auf jeweils separierten Leiterplatten realisiert sein.

Bei einer Ausbildung eines Ringes / Bandes mit mehreren Abschnitten kann die Erfindung weiterhin vorsehen, dass jedes Elektronikteil in einem anderen der Abschnitte angeordnet ist, wobei insbesondere die Elektronikteile benachbarter Abschnitte durch die Verbindungselemente hindurch flexibel elektrisch kontaktiert sind.

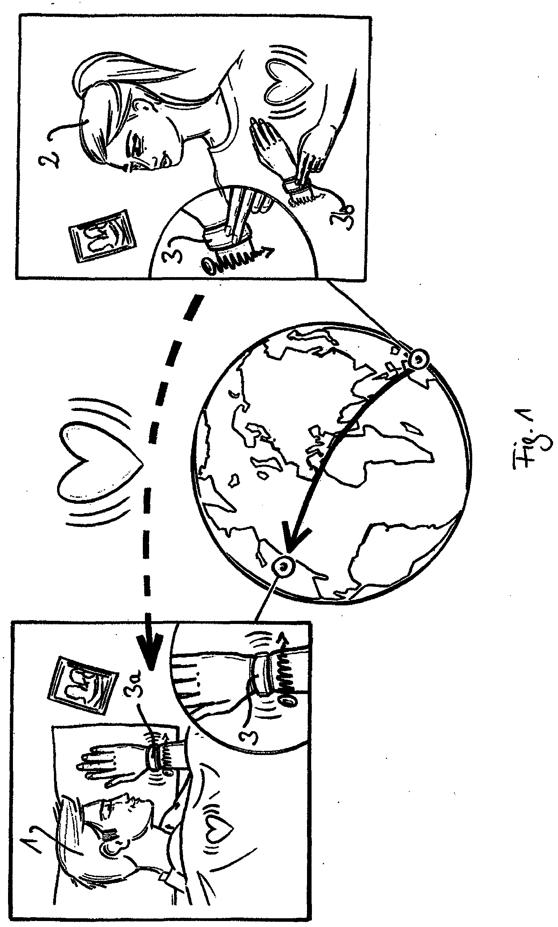

Ausführungsbeispiele der Erfindung werden nachfolgend beschrieben. Die Figur 1 zeigt zwei in Beziehung zueinander stehende Partner 1 und 2 die jeweils einen als erfindungsgemäße Kommunikationseinheit ausgebildeten Ring 3 eines Kommunikationssystems umfassend lediglich zwei solcher Kommunikationseinheiten am Arm tragen.

Die Sende- und Empfangselektronik dieser beiden ringförmigen Kommunikationseinheiten 3 ist untrennbar miteinander gepaart, was bedeutet, dass eine von einer der Kommunikationseinheiten abgesendete Nachricht nur von der anderen gepaarten Kommunikationseinheit empfangbar ist.

In diesem Beispiel leben die beiden in Beziehung stehenden Partner 1 und 2 örtlich weit voneinander entfernt haben jedoch die Möglichkeit sich über das erfindungsgemäße Telekommunikationssystem die jeweilige Zuneigung ausdrückende Nachrichten zukommen zu lassen.

Hierfür kann es die Erfindung vorsehen, dass einer der Partner eine berührungssensitive Fläche des Ringes 3 mit den Fingern berührt oder in Umfangsrichtung überstreicht, wodurch von dem Ring der diese Art der Berührung messtechnisch erfasst eine Nachricht generiert wird, die über ein Kommunikationsnetzwerk, wie beispielsweise das Mobilfunknetzwerk nach dem GSM Standard ggf. unter Einbeziehung einer Internetverbindung an die andere Kommunikationseinheit 3 versendet wird, wo diese Nachricht signalisiert wird durch Betätigung eines in dem Ring angeordneten Aktors als Ausgabeeinheit, was hier beispielsweise durch einen Vibrationsmotor erfolgen kann, der den am Arm getragenen Ring in eine Vibration versetzt, die der Träger 1 spürt. Hierdurch empfängt der Partner 1 eine taktile Nachricht, die ihm anzeigt, dass seine Partnerin 2 gerade im Augenblick an ihn denkt.

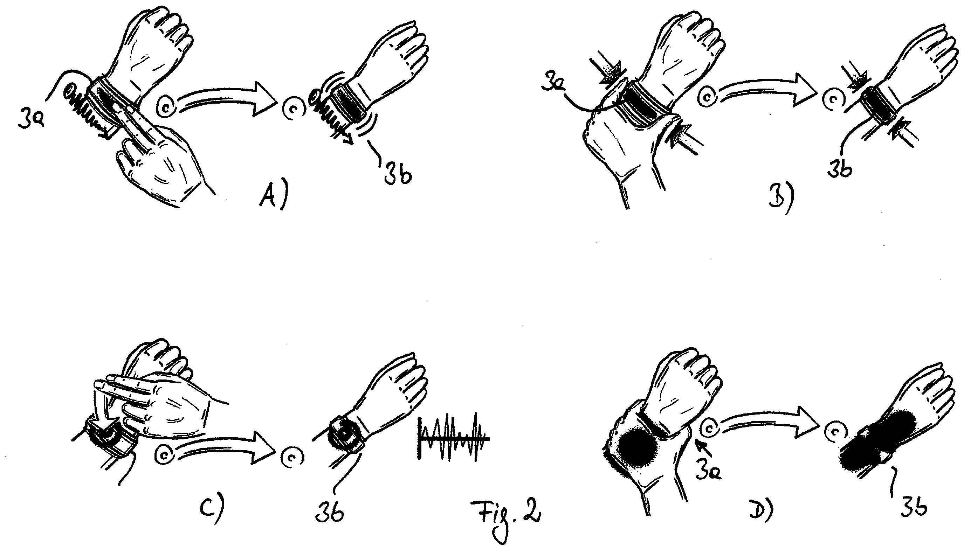

Die Figur 2 visualisiert verschiedene Möglichkeiten der Ein- und Ausgabe von Nachrichten. Gemäß Figur 2a kann es beispielsweise vorgesehen sein, dass einer der Partner über die Oberfläche des Ringes mit den Fingern herüberstreicht, was durch einen berührungsempfindlichen Sensor innerhalb des Ringes messtechnisch erfasst wird und zur Generierung einer Nachricht an die andere gepaarte Kommunikationseinheit 3b führt, die nach Empfang der Nachricht durch Vibration diese Nachricht signalisiert.

Gemäß Figur 2b kann es auch vorgesehen sein eine Nachricht durch eine andere Art und Weise der taktilen Betätigung zu generieren. Beispielsweise wird hier der Ring der sendenden Kommunikationseinheit 3a gedrückt, so dass sich verschiedene Ringabschnitte eines mehrteiligen Ringes gegeneinander verlagern, was sensorisch im Ring festgestellt wird und zu Absendung einer Nachricht an die empfangene ringförmige Kommunikationseinheit 3b führt, die die empfangene Nachricht taktil signalisiert, beispielsweise durch eine Umfangslängenänderung bzw. Durchmesseränderung des Ringes, z.B. durch längenveränderliche Aktoren in den die einzelnen Ringabschnitte verbindenden Verbindungselementen.

Figur 2c visualisiert die Möglichkeit die berührungssensitiven Fläche eines erfindungsgemäßen Ringes tippend zu berühren, was durch einen berührungssensitiven Sensor im Inneren der ringförmigen Kommunikationseinheit sensorisch festgestellt wird und wiederum zur Absendung einer Nachricht zu der gepaarten Kommunikationseinheit 3b führt, wo die empfangene Nachricht taktil signalisiert wird, z.B. durch gepulstes Ansteuern eines Vibrationsmotors oder eines ein Klopfen bewirkenden Aktors.

Figur 2d visualisiert eine Möglichkeit, gemäß der eine thermische Beeinflussung eines Sensors, beispielsweise eines Temperatursensors nahe der Ringoberfläche erzeugt wird, z.B. dadurch dass der Träger der ringförmigen Kommunikationseinheit seine Hand über den Ring legt, wodurch eine Erwärmung des Ringes erfolgt. Bei einer festgestellten Erwärmung z.B. bis über eine Grenztemperatur hinweg, die im Ring gespeichert sein kann, kann wiederum eine Nachricht ausgehend von der Kommunikationseinheit 3a an die Kommunikationseinheit 3b erfolgen wobei es vorgesehen sein kann hier eine Signalisierung durch eine Temperaturerhöhung vorzunehmen.

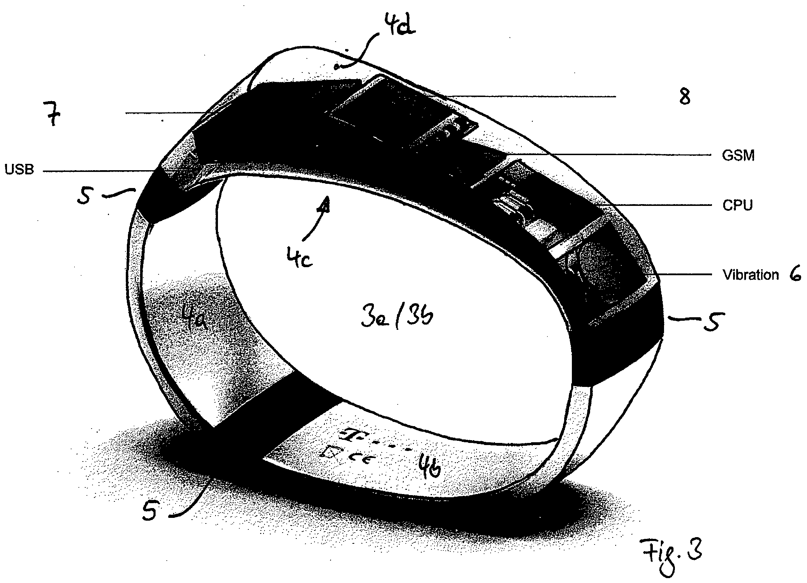

Figur 3 zeigt eine mögliche Ausführung einer ringförmigen Kommunikationseinheit 3a bzw. 3b. Im vorliegenden Fall ist die dargestellte Kommunikationseinheit vorgesehen, um am Handgelenk getragen zu werden. Die Kommunikationseinheit 3a bzw. 3b umfasst mehrere Ringabschnitte 4a, 4b und 4c, die durch Verbindungselemente 5 miteinander verbunden sind. Hier können die Ringabschnitte 4a, 4b und 4c z.B. metallisch ausgebildet sein, wohingegen die Verbindungselemente 5 aus einem Elastomer ausgebildet sind.

Bei der hier dargestellten Ausführung ist es vorgesehen, dass die gesamte Elektronik der erfindungsgemäßen Kommunikationseinheit in einem der Ringabschnitte nämlich hier dem Ringabschnitt 4c integriert ist. Die Dicke des Ringabschnittes, der die Elektronik aufnimmt kann hier in Umfangsrichtung variabel sein, um sicherzustellen, dass unterschiedlich stark aufbauende Elektronikkomponenten hierin Platz finden.

Die hier gezeigte Ausführung weist nahe einer der Verbindungselemente 5 einen Vibrationsmotor 6 auf, mittels dem einer einkommenden Nachricht signalisiert werden kann, was von dem Träger des Ringes taktil wahrgenommen wird. Gegenüberliegend nahe einem anderen Verbindungselement 5 kann hier eine Energieversorgung in Form einer Batterie 7 vorgesehen sein.

Unterhalb der äußeren Oberfläche 4d des Ringelementes 4c wird ein berührungssensitiver Sensor 8 angeordnet, mittels dem eine Berührung der Ringoberfläche messtechnisch erfasst werden kann.

Beispielsweise geschichtet unterhalb der berührungssensitiven Fläche, durch einen kapazitiven berührungsempfindlichen Sensor ausgebildet werden kann, kann eine Kommunikationseinheit zum Empfang und Versenden von Nachrichten angeordnet sein.

Bei einer hier nicht visualisierten Ausführung einer ringförmigen Kommunikationseinheit, die in mehrere Ringabschnitte unterteilt ist kann die Erfindung auch vorsehen die verschiedenen Elektronikteile der gesamten Elektronik jeweils in einem anderen der Ringelemente anzuordnen und diese flexibel untereinander elektrisch zu kontaktieren, insbesondere durch Verbindungselemente hindurch.

Auch bei der hier dargestellten Figur 3 ist die Elektronik mehrteilig aufgebaut umfassend mehrere Elektronikteile, die durch flexible Leiterplatten miteinander verbunden sind, um so zu gewährleisten, dass die Elektronik in der Umfangsrichtung des Ringes der Ringkrümmung folgend in dessen Inneren angeordnet werden kann.

## Patentansprüche

1. Kommunikationssystem umfassend wenigstens zwei am Körper tragbare Kommunikationseinheiten (3a, 3b), ohne Sprach- oder Textkommunikationsmöglichkeit, jeweils mit einer Elektronik umfassend Sende- und Empfangseinheiten zur Kommunikation von Nachrichten zwischen den Kommunikationseinheiten sowie jeweils wenigstens einer Ein- und Ausgabeeinheit zur taktilen oder thermischen Eingabe und taktilen oder thermischen Ausgabe von Nachrichten, wobei die Kommunikationseinheiten (3a, 3b) jeweils als Ring oder Band zum Tragen an Körperextremitäten, insbesondere am Finger oder Armgelenk oder am Hals ausgebildet sind und die Sende- und Empfangseinheiten nicht änderbar miteinander gepaart sind, **dadurch gekennzeichnet, dass** die ring- oder bandförmigen Kommunikationseinheiten in Umfangsrichtung in wenigstens zwei verbundene Abschnitte (4a, 4b, 4c) unterteilt sind, wobei die Abschnitte über elastomere Verbindungselemente (5) verbunden sind und wenigstens eines der Verbindungselemente (5) zwischen den Abschnitten (4a, 4b, 4c) eine Ein- und/oder Ausgabeeinheit umfasst, wobei eine Eingabeeinheit einen mechanischen Sensor umfasst, mit dem eine Verlagerung von Abschnitten (4a, 4b, 4c) gegeneinander messbar ist und eine Ausgabeeinheit einen mechanischen Aktor (6) umfasst, mittels dem eine Verlagerung von Abschnitten (4a, 4b, 4c) gegeneinander bewirkbar ist.

2. Kommunikationssystem nach Anspruch 1, **dadurch gekennzeichnet, dass** die Kommunikationseinheiten in wenigstens zwei Elemente unterteilt sind, wobei eines der Elemente die Elektronik aufweist und die anderen Elemente nach Kundenwunsch aus mehreren design-verschiedenen Elementen wählbar sind.

3. Kommunikationssystem nach einem der vorherigen Ansprüche, **dadurch gekennzeichnet, dass** ein jeweiliger Ring (3a, 3b) oder jeweiliges Band mit mehreren Abschnitten (4a, 4b, 4c) gebildet ist aus einem einstückigen Ring oder Band durch Entfernung von Abschnitten und Ersetzung dieser entfernten Abschnitte durch elastomere Verbindungselemente (5) gleicher Form.

4. Kommunikationssystem nach Anspruch einem der vorherigen Ansprüche , **dadurch gekennzeichnet, dass** die gesamte Elektronik eines jeweiligen Ringes (3a, 3b) oder Bandes in einem einzigen (4c) der mehreren Abschnitte (4a, 4b, 4c) angeordnet ist.

5. Kommunikationssystem nach Anspruch 3 und 4, **dadurch gekennzeichnet, dass** eine Ausgabeeinheit (6) angrenzend an ein Verbindungselement (5) angeordnet ist.

6. Kommunikationssystem nach einem der vorherigen Ansprüche, **dadurch gekennzeichnet, dass** die gesamte Elektronik eines jeweiligen Ringes (3a, 3b) oder Bandes in mehrere Elektronikteile unterteilt ist, insbesondere wobei jedes Elektronikteil in einem anderen der Abschnitte angeordnet ist, wobei die Elektronikteile, insbesondere diejenigen benachbarter Abschnitte untereinander flexibel elektrisch kontaktiert sind, insbesondere mittels flexibler Leiterplatten.

7. Kommunikationssystem nach einem der vorherigen Ansprüche, **dadurch gekennzeichnet, dass** die Elektronik in einem jeweiligen Ring (3a, 3b) oder Band eingerichtet ist mittels wenigstens eines Sensors in Abhängigkeit von Daten dieses wenigstens einen Sensors den aktuellen Tragestatus zwischen "aktuell getragen" und "aktuell nicht getragen" zu unterscheiden.

8. Kommunikationssystem nach Anspruch 7, **dadurch gekennzeichnet, dass** der Sensor als Temperatur- oder Bewegungs- / Beschleunigungssensor ausgebildet ist.

9. Kommunikationssystem nach Anspruch 7 oder 8, **dadurch gekennzeichnet, dass** die Elektronik eines jeweiligen Ringes (3a, 3b) oder Bandes eingerichtet ist, eine vom anderen Ring oder Band empfangene Nachricht beim vorliegenden Status "aktuell nicht getragen" zu speichern und erst zu signalisieren, wenn der Status auf "aktuell getragen" wechselt.

10. Kommunikationssystem nach einem der vorherigen Ansprüche, **dadurch gekennzeichnet, dass** ein jeweiliger Ring (3a, 3b) oder jeweiliges Band wenigstens einen Sensor (8) umfasst, mittels dem eine Berührung des Ringes oder Bandes von dem Träger des Ringes oder Bandes ermittelbar ist, wobei der wenigstens eine Sensor unterhalb einer die äußere Ansichtsfläche des Ringes oder Bandes bildenden Oberfläche angeordnet ist.

## Claims

1. Communication system comprising at least two communication units (3a, 3b), without voice or text communication capability, that can be worn on the body, each having electronics comprising transmission and reception units for communication of messages between the communication units and in each case at least one input and output unit for tactile or thermal input and tactile or thermal output of messages, wherein the communication units (3a, 3b) are each in the form of a ring or band for wearing on body extremities, particularly on the finger or wrist or around the neck and the transmission and reception units are unchangeably paired with one another, **characterized in that** the ring-shaped or band-shaped communication units are divided in the circumferential direction into at least two connected sections (4a, 4b, 4c), wherein the sections are connected by means of elastomeric connecting elements (5) and at least one of the connecting elements (5) comprises an input and/or output unit between the sections (4a, 4b, 4c), wherein an input unit comprises a mechanical sensor that can be used to measure a displacement of sections (4a, 4b, 4b) towards one another and an output unit comprises a mechanical actuator (6) that can be used to cause a displacement of sections (4a, 4b, 4c) towards one another.

2. Communication system according to Claim 1, **characterized in that** the communication units are divided into at least two elements, wherein one of the elements has the electronics and the other elements are selectable from multiple elements of different design according to customer requirements.

3. Communication system according to either of the preceding claims, **characterized in that** a respective ring (3a, 3b) or respective band having multiple sections (4a, 4b, 4c) is formed from a one-piece ring or band by removal of sections and replacement of these removed sections with elastomeric connecting elements (5) of the same shape.

4. Communication system according to one of the preceding claims, **characterized in that** all of the electronics of a respective ring (3a, 3b) or band are arranged in a single instance (4c) of the multiple sections (4a, 4b, 4c).

5. Communication system according to Claims 3 and 4, **characterized in that** an output unit (6) is arranged adjacently to a connecting element (5).

6. Communication system according to one of the preceding claims, **characterized in that** all of the electronics of a respective ring (3a, 3b) or band are divided into multiple electronic parts, in particular wherein each electronic part is arranged in a different instance of the sections, wherein the electronic parts, particularly those of adjacent sections, are in flexible electrical contact among one another, particularly by means of flexible printed circuit boards.

7. Communication system according to one of the preceding claims, **characterized in that** the electronics in a respective ring (3a, 3b) or band are set up to use at least one sensor to take data from said at least one sensor as a basis for distinguishing between the current wearing statuses "currently worn" and "currently not worn".

8. Communication system according to Claim 7, **characterized in that** the sensor is in the form of a temperature or motion/acceleration sensor.

9. Communication system according to Claim 7 or 8, **characterized in that** the electronics of a respective ring (3a, 3b) or band are set up to store a message received from the other ring or band when the present status is "currently not worn" and to first signal said message when the status changes to "currently worn".

10. Communication system according to one of the preceding claims, **characterized in that** a respective ring (3a, 3b) or respective band comprises at least one sensor (8) that can be used to ascertain a touch of the ring or band by the wearer of the ring or band, wherein the at least one sensor is arranged beneath a surface that forms the outer viewing surface of the ring or band.

## Revendications

1. Système de communication comprenant au moins deux unités de communication (3a, 3b) pouvant être portées sur le corps, sans possibilité vocale ou de télécommunication, dotées respectivement d'une électronique comprenant des unités d'émission et de réception servant à la communication de messages entre les unités de communication ainsi que respectivement au moins une unité d'entrée et de sortie servant à l'entrée tactile ou thermique et à la sortie tactile ou thermique de messages, les unités de communication (3a, 3b) étant respectivement réalisées sous la forme d'une bague ou d'une bande destinée à être portée sur les extrémités du corps, notamment sur un doigt ou un poignet ou autour du cou, et les unités d'émission et de réception étant appariées entre elles de manière non modifiable,
**caractérisé en ce que** les unités de communication en forme de bague ou de bande sont divisées dans le sens circonférentiel en au moins deux portions (4a, 4b, 4c) reliées, les portions étant reliées par le biais d'éléments de liaison (5) en élastomère et au moins l'un des éléments de liaison (5) entre les portions (4a, 4b, 4c) comprenant une unité d'entrée et/ou de sortie, une unité d'entrée comprenant un capteur mécanique qui permet de mesurer un changement de position des portions (4a, 4b, 4c) les unes par rapport aux autres et une unité de sortie comprenant un actionneur mécanique (6) qui permet de produire un changement de position des portions (4a, 4b, 4c) les unes par rapport aux autres.

2. Système de communication selon la revendication 1, **caractérisé en ce que** les unités de communication sont divisées en au moins deux éléments, l'un de ces éléments possédant l'électronique et les autres éléments pouvant être choisis en fonction du souhait du client parmi plusieurs éléments aux designs différents.

3. Système de communication selon l'une des revendications précédentes, **caractérisé en ce qu'**une bague (3a, 3b) respective ou une bande respective comprenant plusieurs portions (4a, 4b, 4c) est formée à partir d'une bague ou d'une bande monobloc en retirant des portions et en remplaçant ces portions retirées par des éléments de liaison (5) en élastomère de forme identique.

4. Système de communication selon l'une des revendications précédentes, **caractérisé en ce que** l'ensemble de l'électronique d'une bague (3a, 3b) respective ou d'une bande est disposée dans une seule (4c) des plusieurs portions (4a, 4b, 4c).

5. Système de communication selon la revendication 3 ou 4, **caractérisé en ce qu'**une unité de sortie (6) est disposée adjacente d'un élément de liaison (5) .

6. Système de communication selon l'une des revendications précédentes, **caractérisé en ce que** l'ensemble de l'électronique d'une bague (3a, 3b) respective ou d'une bande est divisé en plusieurs parties électroniques, chaque partie électronique étant notamment disposée dans une autre des portions, les parties électroniques, notamment celles des portions voisines, étant mises en contact électrique entre elles de manière flexible, notamment au moyen de circuits imprimés souples.

7. Système de communication selon l'une des revendications précédentes, **caractérisé en ce que** l'électronique dans une bague (3a, 3b) respective ou une bande est conçue pour différentier l'état de port actuel entre « actuellement portée » et « actuellement non portée » au moyen d'au moins un capteur en fonction des données de cet au moins un capteur.

8. Système de communication selon la revendication 7, **caractérisé en ce que** le capteur est réalisé sous la forme d'un capteur de température ou de mouvement/accélération.

9. Système de communication selon la revendication 7 ou 8, **caractérisé en ce que** l'électronique d'une bague (3a, 3b) respective ou d'une bande est conçue pour mémoriser un message reçu de la part de l'autre bague ou bande en présence de l'état « actuellement non portée » et pour ne le signaler que lorsque l'état change en « actuellement portée ».

10. Système de communication selon l'une des revendications précédentes, **caractérisé en ce qu'**une bague (3a, 3b) respective ou une bande respective comprend au moins un capteur (8) qui permet de déterminer un toucher de la bague ou de la bande par le porteur de la bague ou de la bande, l'au moins un capteur étant disposé au-dessous d'une surface qui forme la surface apparente extérieure de la bague ou de la bande.
